# EUROPEAN PATENT SPECIFICATION

(11) **EP 2 412 592 B1**
(45) Date of publication and mention of the grant of the patent: **03.07.2013**
(21) Application number: 11175185.5
(22) Date of filing: 25.07.2011
(51) Int. Cl.: B60T 13/14, B60T 13/68

(54) **Electric hydraulic booster**
Elektrischer hydraulischer Bremskraftverstärker
Servofrein hydraulique électrique

(30) Priority: 28.07.2010 US 845151
(43) Date of publication of application: 01.02.2012
(73) Proprietor: ROBERT BOSCH GMBH, 70469 Stuttgart (DE)
(72) Inventor: Klimes, Milan, Niles, MI Michigan 49120 (US)
(74) Representative: Isarpatent

(56) References cited:
- DE-A1- 19 703 776

## Description

### Field

The invention relates to braking systems, and in particular to an electrically controlled hydraulic booster.

### Background

A braking system typically includes a master cylinder which is fluidly coupled to downstream braking circuits. Typically the master cylinder is selectively coupled to a fluid reservoir. A seal arrangement allows fluid flow from the reservoir to the master cylinder and also isolates the master cylinder form the reservoir. A master cylinder piston within the master cylinder slidably seals against the seal arrangement in order to pressurize fluid within the master cylinder, and thereby pressurize the downstream braking circuits.

In modem braking systems a boost system is typically provided to supply a boost function (i.e., assist in moving the master cylinder piston by providing a boosted force to the master cylinder piston in place or in addition to a force provided by the operator to a brake pedal). Typically the boost function is provided by either a vacuum boost system utilizing available vacuum in an engine, or by a hydraulic boost system. In the hydraulic boost system, a high pressure fluid generator, e.g., a pump, provides high fluid pressure to an accumulator which is utilized to provide the desired boost function.

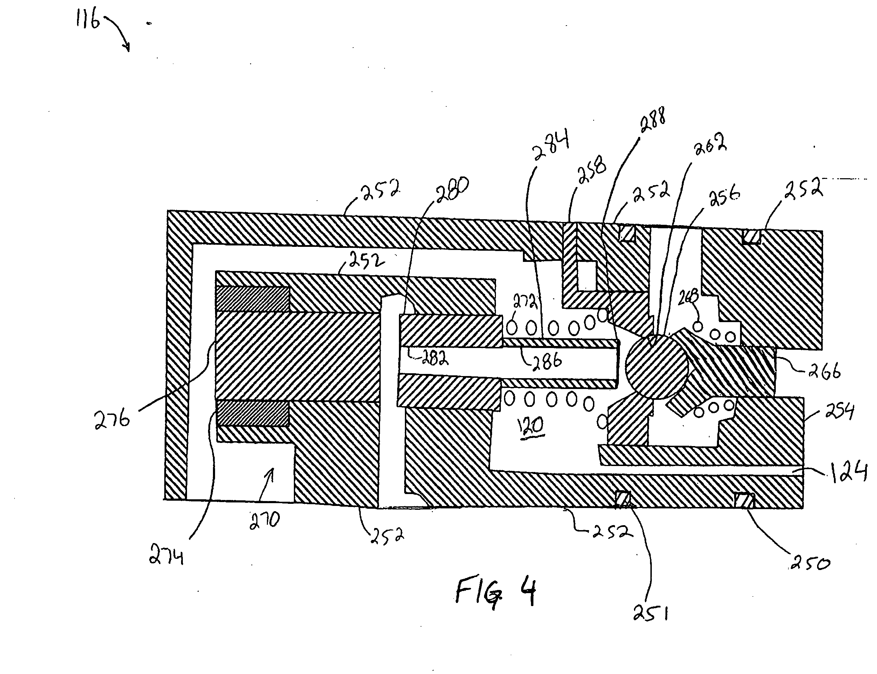

The hydraulic boost system uses position of an input rod that is mechanically coupled to the brake pedal in order to determine the amount of boost. The amount of boost that is provided to the master cylinder piston is relative to the position of the brake pedal. An example of a known hydraulic brake pressure boost system is described in the published German Patent Application DE 197 03 776 A1.
Document DE 197 03 776 A1 shows the following features of claim 1:
A braking system with an electric hydraulic booster comprising:
a booster chamber (inside of master cylinder 2);
a booster piston activating chamber (13);
a booster piston (12) located between the booster chamber and the booster activating chamber; and
a solenoid valve (47, fig. 4) operably connected to a high pressure source, the booster chamber, and the booster piston activating chamber, the solenoid movable between (i) a first position whereat the booster chamber and the booster piston activating chamber are in fluid communication and fluidly isolated from the high pressure source, (ii) a second position whereat the booster chamber and the booster piston activating chamber are fluidly isolated from each other and from the high pressure source, and (iii) a third position whereat the booster piston activating chamber and the high pressure source are in fluid communication and fluidly isolated from the booster chamber.

Furthermore, in a failure mode (i.e., when the high pressure system is inoperable), providing a limited braking function remains desirable.

Therefore, it is highly desirable to provide a hydraulic boost system utilizing a high pressure source which is capable of quickly reacting to movement of the brake pedal and provide a boosted force to the master cylinder piston in response to the position of the input rod coupled to the brake pedal and also provide a limited braking function in a failure mode in which the high pressure source is inoperable.

### Summary

The present invention provides a braking system with an electric hydraulic booster as recited in claim 1. Various preferred features of the invention are recited in the dependent claims. According to one embodiment of the present disclosure, therefore, there is provided a braking system with an electric hydraulic booster. The braking system with an electric hydraulic booster includes a booster chamber, a booster piston activating chamber, a booster piston located between the booster chamber and the booster activating chamber, and a solenoid valve operably connected to a high pressure source, the booster chamber, and the booster piston activating chamber, the solenoid movable between (i) a first position whereat the booster chamber and the booster piston activating chamber are in fluid communication and fluidly isolated from the high pressure source, (ii) a second position whereat the booster chamber and the booster piston activating chamber are fluidly isolated from each other and from the high pressure source, and (iii) a third position whereat the booster piston activating chamber and the high pressure source are in fluid communication and fluidly isolated from the booster chamber.

According to one embodiment of the present disclosure, there is provided a braking system with an electric hydraulic booster. The braking system with an electric hydraulic booster includes a high pressure source, a booster chamber, a booster piston rearward of the booster chamber, and a solenoid valve including a first port selectively fluidly coupled with the high pressure source, a second port selectively fluidly coupled with the booster chamber, and a third port in fluid communication with a rear facing portion of the booster piston.

### Brief Description of the Drawings

FIG. 1 depicts a partial cross sectional view of a braking system including a high pressure accumulator, a reservoir, a boost piston assembly, a master cylinder assembly, and a pressure regulating assembly, wherein the pressure regulating assembly is positioned in a first position;

FIG. 2 depicts a partial cross sectional view of the boost piston assembly, depicted in FIG. 1;

FIG. 3 depicts a partial cross sectional view of the master cylinder assembly, depicted in FIG. 1;

FIG. 4 depicts a partial cross sectional view of the pressure regulating assembly, depicted in FIG. 1;

FIG. 5 depicts a partial cross sectional view of the braking system shown in FIG. 1 in an initial activation position, wherein the pressure regulating assembly is placed in a second position; and

FIG. 6 depicts a partial cross sectional view of the braking system shown in FIG. 1 in a subsequent activation position, wherein the pressure regulating assembly is placed in a third position.

### Description

For the purposes of promoting an understanding of the principles of the invention, reference will now be made to the embodiments illustrated in the drawings and described in the following written specification. It is understood that no limitation to the scope of the invention is thereby intended. It is further understood that the present invention includes any alterations and modifications to the illustrated embodiments and includes further applications of the principles of the invention as would normally occur to one of ordinary skill in the art to which this invention pertains.

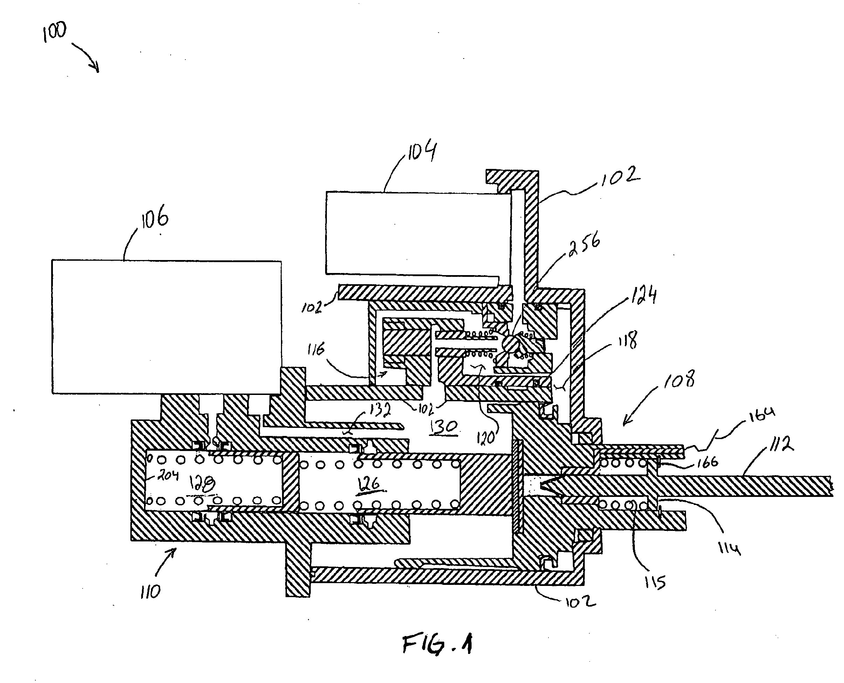

Referring to FIG. 1, a partial cross sectional view of a braking system 100 is depicted. The braking system 100 includes a housing 102, a high pressure accumulator 104, and a reservoir 106. The high pressure accumulator 104 is mechanically coupled to the housing 102 and is fluidly coupled to a high pressure generator (not shown), e.g., a pump (typically an electric motor/pump is utilized for this purpose). The high pressure generator (not shown) is fluidly coupled to the reservoir 106 and maintains high pressure within the high pressure accumulator 104 by pumping fluid from the reservoir 106 thereto.

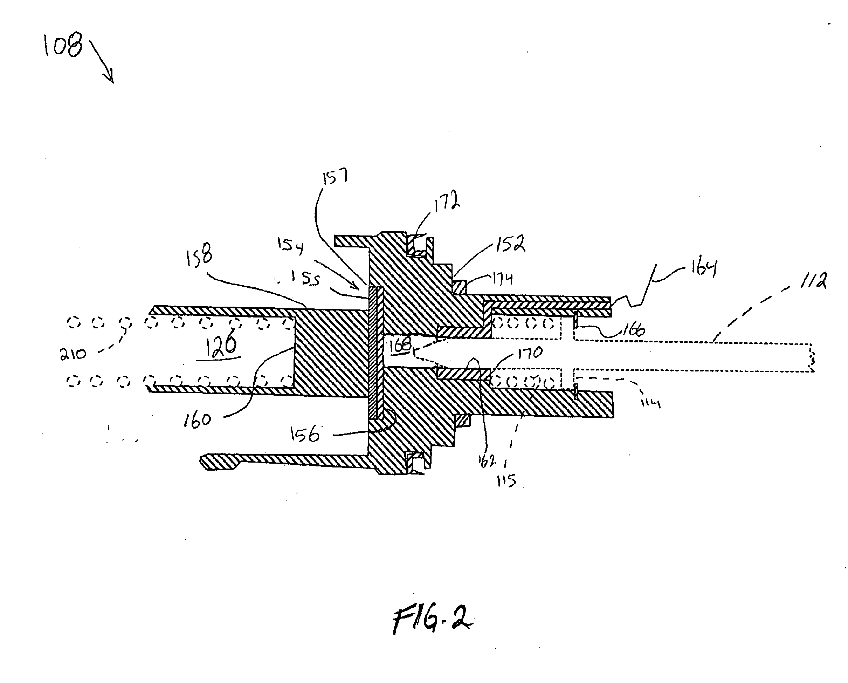

The braking system 100 further includes a boost piston assembly 108 and a master cylinder assembly 110. The boost piston assembly 108 is slidably disposed within the housing 102 and is configured to move from right to left with reference to FIG. 1 in response to application of high pressure fluid from the high pressure accumulator 104, as described further below. An input rod 112 is partially positioned within the boost piston assembly 108 and is configured to move therein. The input rod 112 is coupled to a brake pedal (not shown) in a manner in which movement of the brake pedal (not shown) is translated into linear movement of the input rod 112. The input rod 112 includes a collar 114 which interfaces with a washer 166 to limit the rightward travel of the input rod 112, as described further below with reference to FIG. 2. Additionally, a spring 115 is positioned between the collar 114 and the boost piston assembly 108 and is configured to bias the input rod 112 away from the boost piston assembly 108, and particularly toward the washer 166.

Also included in the braking system 100 is a pressure regulating assembly 116. The pressure regulating assembly 116 is mechanically coupled to the housing 102 and is in fluid communication with the high pressure accumulator 104 and the reservoir 106. The pressure regulating assembly 116 defines a booster piston activating chamber 118, an internal chamber 120, and a fluid channel 124.

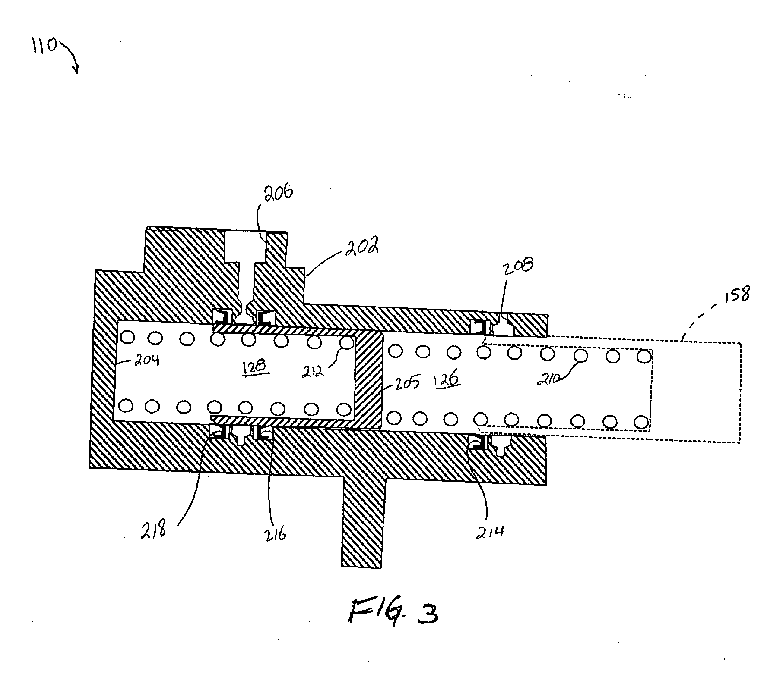

The interface between the boost piston assembly 108 and the master cylinder assembly 110 defines a boost chamber 126, while the master cylinder assembly defines a master cylinder chamber 128. The boost chamber 126 is in selective fluid communication with the reservoir 106 via a fluid channel 208, a chamber 130 and a fluid channel 132 (see also FIG. 3). The master cylinder chamber 128 is also in selective fluid communication with the reservoir 106 via a fluid channel 206, and also in continuous fluid communication with a downstream braking circuit (not shown).

Referring to FIG. 2, a partial cross sectional view of the boost piston assembly 108 is depicted. The boost piston assembly 108 includes a rear body portion 152, a reaction washer assembly 154, and a front body portion 158. The front body portion 158 includes a cavity 160 which partially defines the boost chamber 126. Within the cavity is a spring 210 (depicted in phantom) which biases the front body portion 158 away from a master cylinder piston 205 of the master cylinder assembly 110, described further below in reference to FIG. 3. The front body portion 158 interfaces with the rear body portion 152 via the reaction washer 154.

The reaction washer assembly 154 is a composite member which may include a resilient member 155 and a stiff member 156. Alternatively the reaction washer assembly 154 may be a single stiff member. The reaction washer assembly 154 is positioned within a cavity 157 of the rear body portion 152.

The rear body portion 152 also includes a cavity 168 for receiving the input rod 112 and a travel sensor 162. The input rod 112 (depicted in phantom) is slidably positioned within the cavity 168 and is configured to move leftward within the cavity 168, but be limited in its rightward by the washer 166, as described above. The washer 166 is fixedly coupled to the rear body portion 152.

The travel sensor 162 is also fixedly coupled to the rear body portion 152 and is configured to generate an electrical signal placed on a cable 164 corresponding to the relative position of the input rod 112 with respect to the travel sensor 162. The cable 164 may have multiple wires for transmitting and receiving signals thereon. The travel sensor 162 is coupled to an electronic control unit (ECU, not shown) which is configured to the control pressure regulating assembly 116 and the pressure within the boost activating chamber 118 and the boost chamber 126, as further described below. The ECU (not shown) contains memory including program instructions that may be executed by a processor aboard the EC (not shown).

The travel sensor 162 may be of a digital type sensor, e.g., a frequency shift keying type, configured to generate a signal with varying frequencies, or an analog type sensor, e.g., an amplitude modulated type sensor configured to generate varying amplitudes in response to position of the input rod 112.

As described above, the spring 115 (depicted in phantom) biases the input rod 112 away from a step 170 formed in the rear body portion 152 by providing a biasing force on the collar 114 of the input rod 112.

The boost piston assembly 108 also includes seals 172 and 174 for sealing the rear body portion 152 against the housing 102.

Referring to FIG. 3, a partial cross sectional view of the master cylinder assembly 110 is depicted. The master cylinder assembly 110 includes a cylinder 202 defining an end portion 204, the master cylinder piston 205 and the fluid channels 206 and 208. The space between the end portion 204 and the master cylinder piston 205 defines the master cylinder chamber 128 while the space between the master cylinder piston 205 and the front body portion 158 (depicted in phantom) of the boost piston assembly 158 defines the boost chamber 126. As described above, the spring 210 biases the front body portion 158 away from the master cylinder piston 205, while a spring 212 biases the master cylinder piston 205 away from the end portion 204.

A seal 214 is configured to isolate the boost chamber 126 from the reservoir 106. For example, as depicted in FIG. 3, the front body portion 158 (depicted in phantom) is position beyond the fluid channel 208 but not beyond the seal 214. Therefore, the boost chamber 126 as depicted in FIG. 3 remains in fluid communication with the reservoir 106.

Two seals 216 and 218 are configured to isolate the master cylinder chamber 128 from the reservoir 106. For example, as depicted in FIG. 3, the position of the master cylinder piston 205 is beyond the seal 216 and the fluid channel 206, but not beyond the seal 218. Therefore, the master cylinder chamber 128 as depicted in FIG. 3 is in fluid communication with the reservoir 106.

Referring to FIG. 4, a partial cross sectional view of the pressure regulating assembly 116 is depicted. The pressure regulating assembly 116 includes a body portion 252 (depicted in segments) and a bracket 254. The body portion 252 is sealed with the housing 102 by seals 250 and 251.

The pressure regulating assembly 116 also includes a seal member 256 which is sealingly disposed between an inlet member 258 defining an inlet seat 262 and a spring loaded socket 266. The spring loaded socket 266 is biased away from the body portion 252 and toward the seal member 256 by a spring 268. The spring loaded socket 266 is configured to interface with the seal member 256 in a sealed manner in which the high pressure accumulator 104 is isolated from the interface between the seal member 256 and the spring loaded socket 266.

The pressure regulating assembly 116 also includes a solenoid assembly 270. The solenoid assembly is biased away from the inlet member 258 by the spring 272. The solenoid assembly 270 includes a coil 274, a core 276, and a core extension 280. The coil 274 is fixedly coupled to the body portion 252, while the core 276 and the core extension 280 are slidably disposed between segments of the body portion 252. The core extension 280 is fixedly coupled to the core 276 and is configured to move in response to movement of the core 276. The core extension 280 may be integrally formed with the core 276 or may be formed as a separate member coupled to the core 276 with a fastener. The core extension 280 includes a hollow center 282 which is in fluid communication with the chamber 130 and, therefore, with the reservoir 106.

The pressure regulating assembly 116 also includes a hollow outlet seat 284 with an inner bore 286. The outlet seat 284 is aligned with the core extension 280 in a manner in which the inner bore 286 of the outlet seat 284 is substantially aligned with the hollow center 282 of the core extension 280.

The outlet seat 284 is fixedly coupled to the core extension 280 at a first end of the outlet seat 284. The interface between the outlet seat 284 and the core extension 280 may be one of a permanent type, e.g., welded members, or of a fastened type. The outlet seat 284 includes a seat 288 at a second end of the outlet seat 284. The seat 288 is configured to interface with the seal member 256 and form a seal.

The operation of the braking system 100 is described with initial reference to FIG. 1. The position of the input rod 112 depicted in FIG. 1 corresponds to the brake pedal (not shown) in a released position. The position of the braking system 100 depicted in FIG. 1 is hereinafter referred to as the "rest" position. In the rest position, the boost chamber 126 and the master cylinder chamber 128 are in fluid communication with the reservoir 106 via the fluid channels 208 and 206 (see FIG. 3).

In the rest position, the solenoid assembly 270 is de-energized by the ECU (not shown). Therefore, the spring 272 biases the outlet seat 284 to a location spaced apart from the seal member 256. Thus, the inner core 286 and the hollow center 282 provide a vent path for the boost activating chamber 118 through the fluid channel 124 to the chamber 130 and the reservoir 106 (see FIG. 4).

Additionally, the spring 268 acting on the spring loaded socket 266 which is firmly in contact with the seal member 256 (or integrally formed therewith) forces the seal member 256 against the inlet seat 262 of the inlet member 258, thereby sealing the boost activating chamber 118 from high pressure accumulator 104.

Therefore, the boost chamber 126 which is in fluid communication with the chamber 130 in the rest position is in fluid communication with the boost activating chamber 118 and isolated from the high pressure accumulator 104.

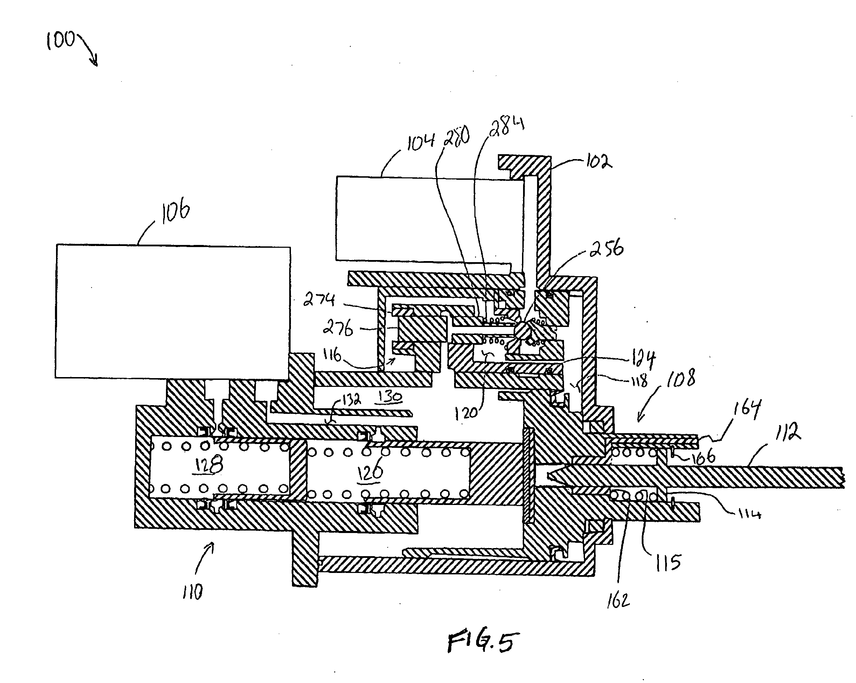

Referring to FIG. 5, the input rod has moved leftward as compared to FIG. 1, in response to the operator applying a force to the brake pedal (not shown). The movement of the input rod is particularly exemplified by the separation between the collar 114 and the washer 166. The spring 115 is compressed in response to the leftward movement of the input rod 112.

The travel sensor 162 senses the leftward movement of the input rod 112 and provides a signal on the cable 164 to the ECU (not shown). The ECU (not shown) receives the signal and energizes the coil 274, e.g., by providing a first voltage level to the coil 274, which magnetically force the core 276 and the core extension 280 rightward (with reference to FIG. 5). Since the outlet seat 284 is fixedly coupled to the core extension 280, the outlet seat 284 moves rightward and makes contact with the seal member 256.

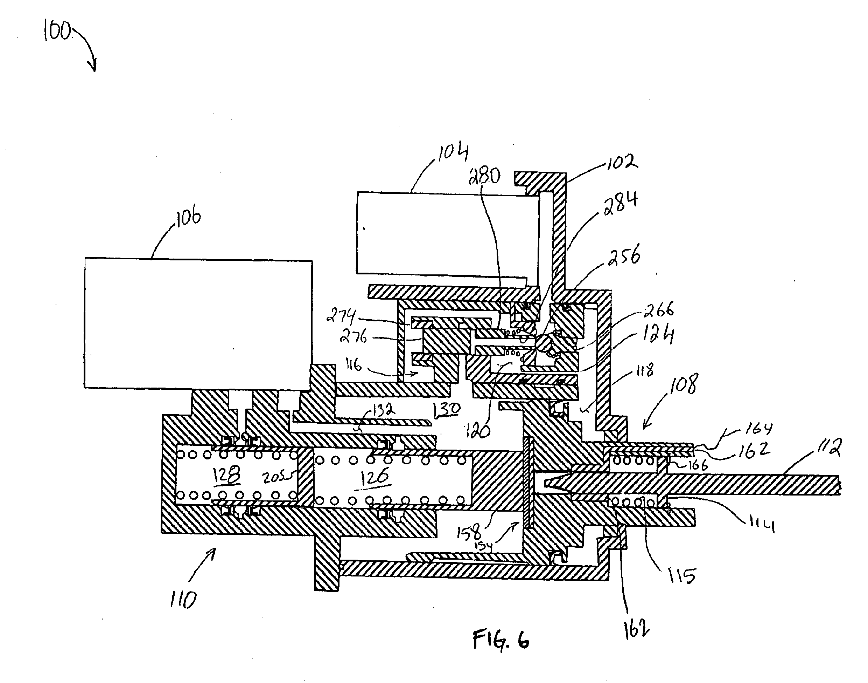

The position of the braking system depicted in FIG. 5 is also referred to as the initial activation position. In the initial activation position, the seat 288 of the outlet seat 284 seals against the seal member 256, thus, the fluid path including the hollow center 282 and the inner core 286 of the outlet seat 284 no longer provides fluid communication between the chamber 130 and the boost activating chamber 118. Therefore, these chambers are isolated from each other. Since the boost chamber 126 in the rest position depicted in FIG. 1 or the initial activation position depicted in FIG. 6 is in fluid communication with the chamber 130, the boost chamber 126 is also isolated from the boost activating chamber 118.

Since the inlet seat 262 of the inlet member 258 remains firmly seated on the seal member 256, thereby providing a seal, the boost activating chamber 118 and the boost chamber 126 remain isolated from the high pressure accumulator 104. In the initial activation position, the braking system is in a ready position to provide the desired braking function.

Referring to FIG. 6, the input rod 112 has traveled further leftward. The travel sensor 162 senses the leftward travel of the input rod 112 and places an electrical signal corresponding to the position of the input rod 112 on the cable 164. The ECU (not shown) receives the signal and further energizes the coil 274, e.g. by providing a second voltage level which is higher than the first voltage level. In response to the additional energizing of the coil 274, the core 276 and the core extension 280 travel further rightward with reference to FIG. 6 which rightward movements cause the outlet seat 284 to further move rightward. The additional rightward movement of the outlet seat 284 moves the seal member 256 off of the inlet seat 262 of the inlet member 258. The force applied to the seal member 256, which remains in firm contact with the spring loaded socket 266, by the outlet seat 284 compresses the spring 268 (see also FIG. 4). In this position, the booster activating chamber 118 and the high pressure accumulator 104 are in fluid communication with each other via the internal chamber 120 and the fluid channel 124.

With fluid entering the boost activating chamber 118, pressure therein begins to rise. In response to the pressure rise, the boost piston assembly 108 moves leftward and thereby moves the front body portion 158, which is in contact with the reaction washer assembly 154, leftward (with reference to FIG. 6). The leftward movement of the boost piston assembly 108 causes the front body portion 158 to seal against the seal 214, and thereby isolates the boost chamber 126 from the chamber 130 and the reservoir 106 (see also FIG. 3).

Once the boost chamber 126 is isolated from the reservoir 106, pressure rises in the boost chamber 126. The pressure rise applies a force to the master cylinder piston 205 which moves it leftward sealing against the seal 218, which thereby isolates the master cylinder chamber 128 from the reservoir 106.

Once the master cylinder chamber 128 is isolated from the reservoir 106, pressure in the master cylinder chamber 128 rises. Since the master cylinder chamber 128 is in continuous fluid communication with the downstream braking circuit (not shown), the pressure rise provides the desired braking function.

With the leftward movement of the boost piston assembly 108, the washer 166 once again comes in contact with the collar 114 (as depicted in FIG. 6). The relative positions of the input rod 112 and the boost piston assembly 108, and in particular the travel sensor 162, causes the travel sensor 162 to generate a signal in correspondence thereto. The signal generated by the travel sensor 162, and placed on the cable 164, is received by the ECU (not shown). In response thereto, the ECU (not shown) reduces the energy provided to the coil 274, e.g., by providing a third voltage to the coil 274, whereby the third voltage is substantially the same as the second voltage.

In response to receiving the smaller energy, the coil 274 provides a smaller magnetic force. Since the core 276 and the core extension 280 are biased away from the inlet member 258 which is fixedly coupled to the body portion 252, the core 276 and the core extension 280 move leftward (with reference to FIG. 6). Since the outlet seat 284 is fixedly coupled to the core extension 280, the outlet seat 284 also moves leftward, which allows the seal member 256 to seal against the inlet seat 262 of the inlet member 258 (see also FIG. 4). Therefore, the solenoid assembly 270 returns to the position depicted in FIG. 5. As described above, in the position depicted in FIG. 5, the boost activating chamber 118 and the boost chamber 126 are isolated from each other and from the high pressure accumulator 104. The difference with the position of the boost piston assembly 108 and the master cylinder assembly 110 that is depicted in FIG. 5, however, is that the boost chamber 126 in FIG. 6 is isolated from the reservoir 106. In this isolated position, the pressure in the boost chamber is raised, as compared to the boost chamber 126 in FIG. 5, and thereby maintains a force on the master cylinder piston 205.

The ECU (not shown) continues to increase and decrease the energy applied to the coil 274 by switching between the first and second voltage levels. Thereby the seal member 256 moves right and left with respect to FIG. 6, in order to provide a modulation of pressure in the boost activating chamber 118.

While not shown, the boost chamber 126 may be continuously coupled to another downstream braking circuit, in order to provide a separate braking function.

Also, while not shown, in the event of a failure of high pressure in the high pressure accumulator 104, e.g., due to failure of the high pressure generator (not shown), the input rod 112 may in response to movement of the brake pedal (not shown) move leftward and make contact with the reaction washer assembly 154. The contact between the input rod 112 and the reaction washer assembly 154 provides the capability of moving the front body portion 158 to provide braking without the boost function. Release of the brake pedal (not shown) moves the input rod 112 rightward which moves the reaction washer assembly 154 and the front body portion 158 rightward, to reduce the braking. The rightward movement is partially generated by the biasing force of the spring 115.

## Claims

1. A braking system (100) with an electric hydraulic booster comprising:
a booster chamber (126);
a booster piston activating chamber (118);
a booster piston (108) located between the booster chamber (126) and the booster activating chamber (118); and
a pressure regulating assembly (116) including a solenoid valve (270) operably connected to a high pressure source (104), the booster chamber (126), and the booster piston activating chamber (118), the solenoid movable between (i) a first position whereat the booster chamber (126) and the booster piston activating chamber (118) are in fluid communication and fluidly isolated from the high pressure source (104), (ii) a second position whereat the booster chamber (126) and the booster piston activating chamber (118) are fluidly isolated from each other and from the high pressure source (104), and (iii) a third position whereat the booster piston activating chamber (118) and the high pressure source (104) are in fluid communication and fluidly isolated from the booster chamber (126);
wherein the pressure regulating assembly (116) further includes an outlet seat (284) having an internal bore (286) in fluid communication with the booster chamber (126), an inlet seat (262), and a sealing member (256),
wherein, when the solenoid valve (270) is in the first position, i) the sealing member (256) forms a seal with the inlet seat (262) that isolates the high pressure source (104) from the booster activating chamber (118) and ii) the outlet seat (284) is spaced apart from the sealing member (256) such that the booster chamber (126) and the booster activating chamber (118) are in fluid communication through the internal bore (286),
wherein, when the solenoid valve (270) is in the second position, i) the sealing member (256) forms a seal with the inlet seat (262) that isolates the high pressure source (104) from the booster activating chamber (118) and ii) the outlet seat (284) is positioned against the sealing member (256) to form a seal that isolates the internal bore (286) and the booster chamber (126) from the booster activating chamber (118), and
wherein, when the solenoid valve (270) is in the third position, i) the sealing member (256) is moved apart from the inlet seat (262) by the outlet seat (284) so that the high pressure source (104) is in fluid communication with the booster activating chamber (118) and ii) the outlet seat (284) is positioned against the sealing member (256) to form a seal that isolates the internal bore (286) and the booster chamber (284) from the booster activating chamber (118) and the high pressure source (104).

2. The braking system (100) of claim 1, further comprising:
a master cylinder piston (205) positioned forwardly of the booster chamber (126); and
a master cylinder spring (212) extending within the booster chamber (126) and configured to bias the master cylinder piston (205) and the booster piston (108) away from each other.

3. The braking system (100) of claim 1, further comprising:
an input rod (112) operably connected to the booster piston (108);
a travel sensor (162) positioned to detect travel of the input rod (112);
a memory including program instructions; and
a controller operably connected to the memory, the travel sensor (162), and the solenoid valve (270) and configured to execute the program instructions to
place the solenoid valve (270) in the second position based upon signals generated by the travel sensor (162),
place the solenoid valve (270) in the third position based upon signals generated by the travel sensor (162), and
allow the solenoid valve (270) to move from the third position to the second position based upon signals generated by the travel sensor (162).

4. The braking system (100) of claim 1, wherein:
the internal bore (286) is aligned with the inlet seat (262).

5. The braking system (100) of claim 4, wherein:
the sealing member (256) is aligned with the internal bore (286) and the inlet seat (262); and
the sealing member (256) is biased in a direction toward the inlet seat (262) by a sealing member spring (268).

6. The braking system (100) of claim 5, further comprising:
an input rod (112) operably connected to the booster piston (108);
a travel sensor (162) positioned to detect travel of the input rod (112);
a memory including program instructions; and
a controller operably connected to the memory, the travel sensor (162), and the solenoid valve (270) and configured to execute the program instructions to
place the solenoid valve (270) in the second position based upon signals generated by the travel sensor (162),
place the solenoid valve (270) in the third position based upon signals generated by the travel sensor (162), and
allow the solenoid valve (270) to move from the third position to the second position based upon signals generated by the travel sensor (162).

7. The braking system of claim 6, further comprising:
a master cylinder piston (205) positioned forwardly of the booster chamber (126); and
a master cylinder spring (212) extending within the booster chamber (126) and configured to bias the master cylinder piston (205) and the booster piston (108) away from each other.

## Patentansprüche

1. Bremssystem (100) mit einem elektrischen hydraulischen Bremskraftverstärker, umfassend:
- eine Bremskraftverstärkerkammer (126);
- eine Bremskraftverstärkerkolben-Aktivierungskammer (118);
- einen Bremskraftverstärkerkolben (108), der zwischen der Bremskraftverstärkerkammer (126) und der Bremskraftverstärkerkolben-Aktivierungskammer (118) angeordnet ist; und
- eine Druckregelanordnung (116), die ein Magnetventil (270) aufweist, das mit einer Hochdruckquelle (104), der Bremskraftverstärkerkammer (126) und der Bremskraftverstärkerkolben-Aktivierungskammer (118) wirkverbunden ist, wobei der Magnet zwischen (i) einer ersten Position, in der die Bremskraftverstärkerkammer (126) und die Bremskraftverstärkerkolben-Aktivierungskammer (118) in fluidischer Verbindung stehen und von der Hochdruckquelle (104) fluidmäßig getrennt sind, (ii) einer zweiten Position, in der die Bremskraftverstärkerkammer (126) und die Bremskraftverstärkerkolben-Aktivierungskammer (118) voneinander und von der Hochdruckquelle (104) fluidmäßig getrennt sind, und (iii) einer dritten Position beweglich ist, in der die Bremskraftverstärkerkolben-Aktivierungskammer (118) und die Hochdruckquelle (104) in fluidischer Verbindung stehen und von der Bremskraftverstärkerkammer (126) fluidmäßig getrennt sind;
wobei die Druckregelanordnung (116) ferner einen Auslasssitz (284) mit einer Innenbohrung (286) in fluidischer Verbindung mit der Bremskraftverstärkerkammer (126), einen Einlasssitz (262) und ein Dichtungselement (256) aufweist,
wobei, wenn sich das Magnetventil (270) in der ersten Position befindet, i) das Dichtungselement (256) eine Dichtung mit dem Einlasssitz (262) bildet, welche die Hochdruckquelle (104) von der Bremskraftverstärker-Aktivierungskammer (118) trennt, und ii) der Auslasssitz (284) von dem Dichtungselement (256) derart beabstandet ist, dass die Bremskraftverstärkerkammer (126) und
die Bremskraftverstärker-Aktivierungskammer (118) über die Innenbohrung (286) in fluidischer Verbindung stehen, wobei, wenn sich das Magnetventil (270) in der zweiten Position befindet, i) das Dichtungselement (256) eine Dichtung mit dem Einlasssitz (262) bildet, welche die Hochdruckquelle (104) von der Bremskraftverstärker-Aktivierungskammer (118) trennt, und ii) der Auslasssitz (284) an dem Dichtungselement (256) platziert ist, um eine Dichtung zu bilden, welche die Innenbohrung (286) und die Bremskraftverstärkerkammer (126) von der Bremskraftverstärker-Aktivierungskammer (118) trennt, und wobei, wenn sich das Magnetventil (270) in der dritten Position befindet, i) das Dichtungselement (256) von dem Einlasssitz (262) durch den Auslasssitz (284) wegbewegt wird, sodass die Hochdruckquelle (104) in fluidischer Verbindung mit der Bremskraftverstärker-Aktivierungskammer (118) steht, und ii) der Auslasssitz (284) an dem Dichtungselement (256) platziert ist, um eine Dichtung zu bilden, welche die Innenbohrung (286) und die Bremskraftverstärkerkammer (126) von der Bremskraftverstärker-Aktivierungskammer (118) und der Hochdruckquelle (104) trennt.

2. Bremssystem (100) nach Anspruch 1, ferner umfassend:
- einen Hauptzylinderkolben (205), der vor der Bremskraftverstärkerkammer (126) platziert ist; und
- eine Hauptzylinderfeder (212), die innerhalb der Bremskraftverstärkerkammer (126) verläuft und eingerichtet ist, den Hauptzylinderkolben (205) und den Bremskraftverstärkerkolben (108) voneinander weg vorzuspannen.

3. Bremssystem (100) nach Anspruch 1, ferner umfassend:
- einen Eingangsstößel (112), der mit dem Bremskraftverstärkerkolben (108) wirkverbunden ist;
- einen Wegsensor (162), der so platziert ist, dass er den Weg des Eingangsstößels (112) erfasst;
- einen Speicher, der Programmanweisungen umfasst; und
- eine Steuerung, die mit dem Speicher, dem Wegsensor (162) und dem Magnetventil (270) wirkverbunden und derart eingerichtet ist, dass sie die Programmanweisungen ausführt, um
• auf der Grundlage von Signalen, die von dem Wegsensor (162) erzeugt werden, das Magnetventil (270) in die zweite Position zu bringen,
• auf der Grundlage von Signalen, die von dem Wegsensor (162) erzeugt werden, das Magnetventil (270) in die dritte Position zu bringen, und
• auf der Grundlage von Signalen, die von dem Wegsensor (162) erzeugt werden, zuzulassen, dass sich das Magnetventil (270) aus der dritten Position in die zweite Position bewegt.

4. Bremssystem (100) nach Anspruch 1, wobei die Innenbohrung (286) nach dem Einlasssitz (262) ausgerichtet ist.

5. Bremssystem (100) nach Anspruch 4, wobei:
das Dichtungselement (256) nach der Innenbohrung (286) und dem Einlasssitz (262) ausgerichtet ist; und
das Dichtungselement (256) durch eine Dichtungselementfeder (268) in eine Richtung zum Einlasssitz (262) hin vorgespannt ist.

6. Bremssystem (100) nach Anspruch 5, ferner umfassend:
- einen Eingangsstößel (112), der mit dem Bremskraftverstärkerkolben (108) wirkverbunden ist;
- einen Wegsensor (162), der so platziert ist, dass der den Weg des Eingangsstößels (112) erfasst;
- einen Speicher, der Programmanweisungen umfasst; und
- eine Steuerung, die mit dem Speicher, dem Wegsensor (162) und dem Magnetventil (270) wirkverbunden und derart eingerichtet ist, dass sie die Programmanweisungen ausführt, um
• auf der Grundlage von Signalen, die von dem Wegsensor (162) erzeugt werden, das Magnetventil (270) in die zweite Position zu bringen,
• auf der Grundlage von Signalen, die von dem Wegsensor (162) erzeugt werden, das Magnetventil (270) in die dritte Position zu bringen, und
• auf der Grundlage von Signalen, die von dem Wegsensor (162) erzeugt werden, zuzulassen, dass sich das Magnetventil (270) aus der dritten Position in die zweite Position bewegt.

7. Bremssystem nach Anspruch 6, ferner umfassend:
- einen Hauptzylinderkolben (205), der vor der Bremskraftverstärkerkammer (126) platziert ist; und
- eine Hauptzylinderfeder (212), die innerhalb der Bremskraftverstärkerkammer (126) verläuft und eingerichtet ist, den Hauptzylinderkolben (205) und den Bremskraftverstärkerkolben (108) voneinander weg vorzuspannen.

## Revendications

1. Système de freinage (100) avec un surpresseur hydraulique électrique comprenant :
- une chambre de surpresseur (126) ;
- une chambre d'activation de piston de surpresseur (118) ;
- un piston de surpresseur (108) situé entre la chambre de surpresseur (126) et la chambre d'activation de surpresseur (118) ; et
- un ensemble de régulation de pression (116) comprenant une électrovanne (270) reliée fonctionnellement à une source haute pression (104), la chambre de surpresseur (126), et la chambre d'activation de piston de surpresseur (118), l'électro-aimant étant mobile entre (i) une première position dans laquelle la chambre de surpresseur (126) et la chambre d'activation de piston de surpresseur (118) sont en communication de fluide et isolées fluidiquement de la source haute pression (104), (ii) une deuxième position dans laquelle la chambre de surpresseur (126) et la chambre d'activation de piston de surpresseur (118) sont isolées fluidiquement l'une de l'autre et de la source haute pression (104), et (iii) une troisième position dans laquelle la chambre d'activation de piston de surpresseur (118) et la source haute pression (104) sont en communication de fluide et isolées fluidiquement de la chambre de surpresseur (126) ;
dans lequel l'ensemble de régulation de pression (116) comprend en outre un siège de sortie (284) ayant un alésage interne (286) en communication de fluide avec la chambre de surpresseur (126), un siège d'entrée (262), et un élément d'étanchéité (256),
dans lequel, lorsque l'électrovanne (270) est dans la première position, i) l'élément d'étanchéité (256) forme un joint étanche avec le siège d'entrée (262) qui isole la source haute pression (104) de la chambre d'actionnement de surpresseur (118) et ii) le siège de sortie (284) est écarté de l'élément d'étanchéité (256) de telle sorte que la chambre de surpresseur (126) et la chambre d'activation de surpresseur (118) sont en communication de fluide au moyen de l'alésage interne (286),
dans lequel, lorsque l'électrovanne (270) est dans la deuxième position, i) l'élément d'étanchéité (256) forme un joint étanche avec le siège d'entrée (262) qui isole la source haute pression (104) de la chambre d'activation de surpresseur (118) et ii) le siège de sortie (284) est positionné contre l'élément d'étanchéité (256) pour former un joint étanche qui isole l'alésage interne (286) et la chambre de surpresseur (126) de la chambre d'activation de surpresseur (118), et
dans lequel, lorsque l'électrovanne (270) est dans la troisième position, i) l'élément d'étanchéité (256) est écarté du siège d'entrée (262) par le siège de sortie (284) de telle sorte que la source haute pression (104) est en communication de fluide avec la chambre d'activation de surpresseur (118) et ii) le siège de sortie (284) est positionné contre l'élément d'étanchéité (256) pour former un joint étanche qui isole l'alésage interne (286) et la chambre de surpresseur (284) de la chambre d'activation de surpresseur (118) et de la source haute pression (104).

2. Système de freinage (100) selon la revendication 1, comprenant en outre :
- un piston de maître-cylindre (205) positionné à l'avant de la chambre de surpresseur (126) ; et
- un ressort de maître-cylindre (212) s'étendant à l'intérieur de la chambre de surpresseur (126) et configuré pour pousser le piston de maître-cylindre (205) et le piston de surpresseur (108) loin de l'autre.

3. Système de freinage (100) selon la revendication 1, comprenant en outre :
- une entrée (112) reliée fonctionnellement au piston de surpresseur (108) ;
- un capteur de déplacement (162) positionné pour détecter les déplacements de la tige d'entrée (112) ;
- une mémoire comprenant des instructions de programme ; et
- un dispositif de commande relié fonctionnellement à la mémoire, au capteur de déplacement (162), et à l'électrovanne (270) et configuré pour exécuter les instructions de programme pour
• placer l'électrovanne (270) dans la deuxième position en fonction de signaux générés par le capteur de déplacement (162),
• placer l'électrovanne (270) dans la troisième position en fonction de signaux générés par le capteur de déplacement (162), et
• permettre à l'électrovanne (270) de passer de la troisième position à la seconde position en fonction de signaux générés par le capteur de déplacement (162).

4. Système de freinage (100) selon la revendication 1, dans lequel :
l'alésage interne (286) est aligné avec le siège d'entrée (262).

5. Système de freinage (100) selon la revendication 4, dans lequel :
l'élément d'étanchéité (256) est aligné avec l'alésage interne (286) et le siège d'entrée (262) ; et
l'élément d'étanchéité (256) est sollicité dans une direction vers le siège d'entrée (262) par un ressort d'élément d'étanchéité (268).

6. Système de freinage (100) selon la revendication 5, comprenant en outre :
- une tige d'entrée (112) reliée fonctionnellement au piston de surpresseur (108) ;
- un capteur de déplacement (162) positionné pour détecter les déplacements de la tige d'entrée (112) ;
- une mémoire comprenant des instructions de programme ; et
- un dispositif de commande relié fonctionnellement à la mémoire, au capteur de déplacement (162) et à l'électrovanne (270) et configuré pour exécuter les instructions de programme pour
• placer l'électrovanne (270) dans la deuxième position en fonction de signaux générés par le capteur de déplacement (162),
• placer l'électrovanne (270) dans la troisième position en fonction de signaux générés par le capteur de déplacement (162), et
• permettre à l'électrovanne (270) de passer de la troisième position à la seconde position en fonction de signaux générés par le capteur de déplacement (162).

7. Système de freinage selon la revendication 6, comprenant en outre :
- un piston de maître-cylindre (205) positionné à l'avant de la chambre de surpresseur (126) ; et
- un ressort de maître-cylindre (212) s'étendant à l'intérieur de la chambre de surpresseur (126) et configuré pour pousser le piston de maître-cylindre (205) et le piston de surpresseur (108) loin de l'autre.
